# EUROPEAN PATENT APPLICATION

(11) **EP 1 898 641 A2**
(43) Date of publication of application: **12.03.2008**
(21) Application number: 07253380.5
(22) Date of filing: 28.08.2007
(51) Int. Cl.: H04N 5/76

(54) **Recording/reproduction apparatus, display control method, and program**

(30) Priority: 08.09.2006 JP 2006244569
(71) Applicant: Sony Corporation, Minato-ku Tokyo 108-0075 (JP)
(72) Inventor: Saito, Naoki, Tokyo 108-0075 (JP)
(74) Representative: Keston, Susan Elizabeth

(57) **Abstract**

A recording/reproduction apparatus includes an acquisition section and a display control section. The acquisition section is configured to acquire the time necessary for reproducing the entire target content. The display control section is configured to display a bar that indicates the time acquired by the acquisition section, and exercise control so that a section between a position corresponding to the time at which the recording of the content started and a position corresponding to the time at which the recording is currently performed or the recording ended is displayed within the displayed bar in a manner different from the manner in which an unrecorded section is displayed.

## Description

The present invention relates to a recording/reproduction apparatus, display control method, and program.

Some previously developed devices are capable of recording television broadcasts and other types of content and displaying a progress bar as a GUI (Graphical User Interface) that enables the user to readily grasp the current reproduction position.

The progress bar appears, for instance, at a corner of a screen and becomes superposed over a displayed content image when the user issues an instruction for turning on the progress bar by operating, for instance, a remote controller while the user is viewing a recorded content.

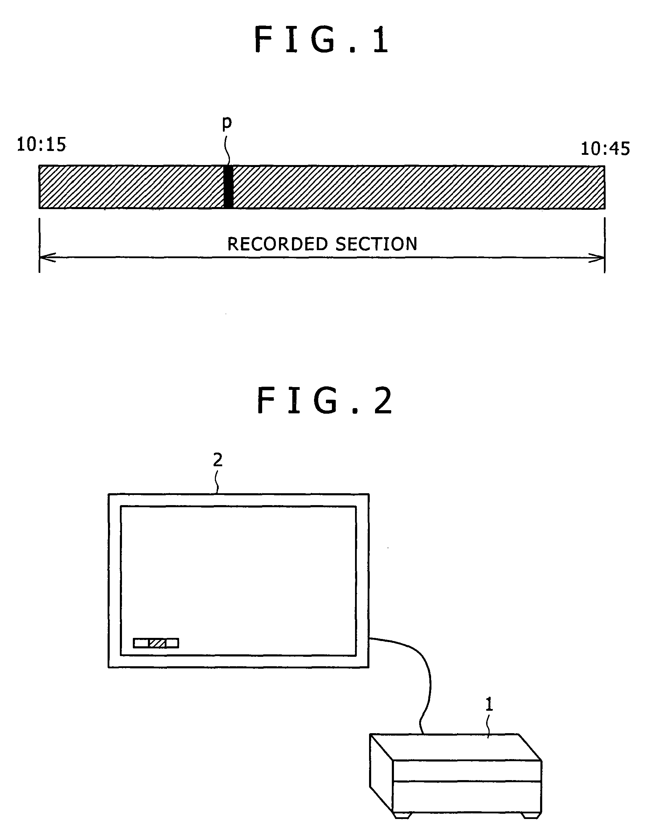

FIG. 1 shows an example of a previously used on-screen progress bar.

As shown in FIG. 1, the progress bar is an on-screen strip having a predetermined length. Its overall length represents the length of the entire broadcast recording. The example shown in FIG. 1 indicates that recording started at 10:15 and ended at 10:45. The time values "10:15" and "10:45" are displayed above the left- and right-hand ends of the progress bar, respectively.

The progress bar shown in FIG. 1 appears when the user reproduces a broadcast program that was broadcast, for instance, between 10 o'clock and 11 o'clock and recorded between 10:15 and 10:45.

Further, a pointer P is displayed at a progress bar position that corresponds to the current reproduction position. This enables the user to confirm the current reproduction position with respect to the entire broadcast recording. The location of the pointer P, which is shown in FIG. 1, indicates that the user is viewing a portion broadcast around 10:20, which is earlier than the middle of a period (between 10:15 and 10:45) during which the entire recording was made.

A technology disclosed by Japanese Patent Laid-open No. Hei 10-304313 (U.S. Patent 6204886 B1) determines the time at which the currently displayed image was recorded, and indicates the determined recording time with respect to the current time by using an icon or the like.

When the progress bar shown in FIG. 1 is displayed, the entire progress bar represents a recorded section. Therefore, the displayed progress bar does not indicate what time zone of a broadcast is recorded.

If, for instance, the user remembers that the recorded broadcast was broadcast during a time zone between 10 o'clock and 11 o'clock, the progress bar shown in FIG. 1 allows the user to understand that the middle of the broadcast was recorded. However, if the user does not remember the time zone during which the broadcast was broadcast, the progress bar shown in FIG. 1 does not allow the user to understand that the middle of the broadcast was recorded.

Various respective aspects and features of the invention are defined in the appended claims. Combinations of features from the dependent claims may be combined with features of the independent claims as appropriate and not merely as explicitly set out in the claims.

According to an embodiment of the present invention, there is provided a recording/reproduction apparatus that includes an acquisition section and a display control section. The acquisition section acquires the time necessary for reproducing the entire target content. The display control section displays a bar to indicate the time acquired by the acquisition section, and exercises control so that a section between a position corresponding to the time at which the recording of the content started and a position corresponding to the time at which the recording is currently performed or the recording ended is displayed within the displayed bar in a manner different from the manner in which an unrecorded section is displayed.

Embodiments of the invention permit a user to visually grasp the length and position of a recorded section with respect to the entire content.

According to another embodiment of the present invention, there is provided a display control method that includes the steps of: acquiring the time necessary for reproducing the entire target content; displaying a bar to indicate the acquired time; and exercising control so that a section between a position corresponding to the time at which the recording of the content started and a position corresponding to the time at which the recording is currently performed or the recording ended is displayed within the displayed bar in a color different from the color in which an unrecorded section is displayed.

According to still another embodiment of the present invention, there is provided a program that causes a computer to perform a process including the steps of: acquiring the time necessary for reproducing the entire target content; displaying a bar to indicate the acquired time; and exercising control so that a section between a position corresponding to the time at which the recording of the content started and a position corresponding to the time at which the recording is currently performed or the recording ended is displayed within the displayed bar in a color different from the color in which an unrecorded section is displayed.

An embodiment of the present invention acquires the time necessary for reproducing the entire target content, displays a bar to indicate the acquired time, and exercises control so that a section between a position corresponding to the time at which the recording of the content started and a position corresponding to the time at which the recording is currently performed or the recording ended is displayed within the displayed bar in a manner different from the manner in which an unrecorded section is displayed.

An embodiment of the present invention enables the user to visually grasp the length and position of a recorded section with respect to the entire content.

Embodiments of the invention will now be described with reference to the accompanying drawings, throughout which like parts are referred to by like references, and in which:
FIG. 1 shows an example of a previously used on-screen progress bar;
FIG. 2 shows a recording/reproduction apparatus according to an embodiment of the present invention;
FIG. 3 shows an example to indicate how a progress bar is displayed;
FIG. 4 is a block diagram illustrating a typical hardware configuration of the recording/reproduction apparatus;
FIG. 5 is a block diagram illustrating a typical functional configuration of the recording/reproduction apparatus;
FIG. 6 is a flowchart illustrating a progress bar display process that is performed by the recording/reproduction apparatus;
FIG. 7 shows an example to indicate how the progress bar is displayed during normal viewing;
FIG. 8 shows an example to indicate how the progress bar is displayed during recording;
FIG. 9 shows an example to indicate how the progress bar is displayed while a recorded section is reproduced; and
FIG. 10 is a block diagram illustrating a typical configuration of a personal computer.

Embodiments of the present invention will now be described. Embodiments of the present invention are described in this document and/or depicted in the accompanying drawings.

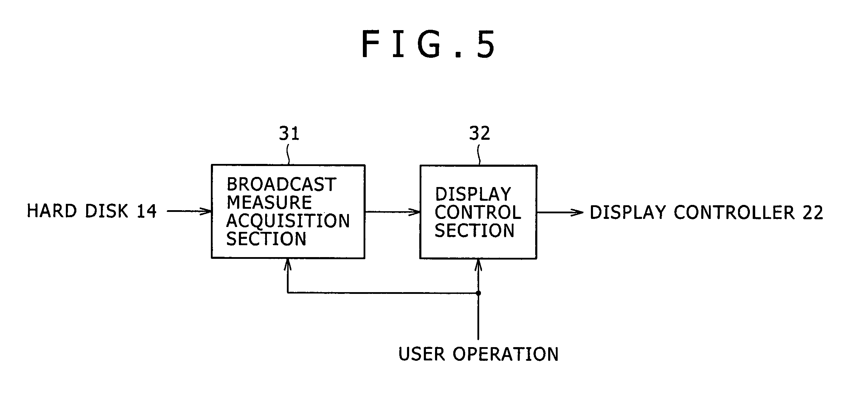

A recording/reproduction apparatus (e.g., a recording/reproduction apparatus 1 in FIG. 2) according to an embodiment of the present invention includes an acquisition section (e.g., a broadcast measure acquisition section 31 in FIG. 5) and a display control section (e.g., a display control section 32 in FIG. 5). The acquisition section acquires the time necessary for reproducing the entire target content. The display control section displays a bar to indicate the time acquired by the acquisition section, and exercises control so that a section between a position corresponding to the time at which the recording of the content started and a position corresponding to the time at which the recording is currently performed or the recording ended is displayed within the displayed bar in a color different from the color in which an unrecorded section is displayed.

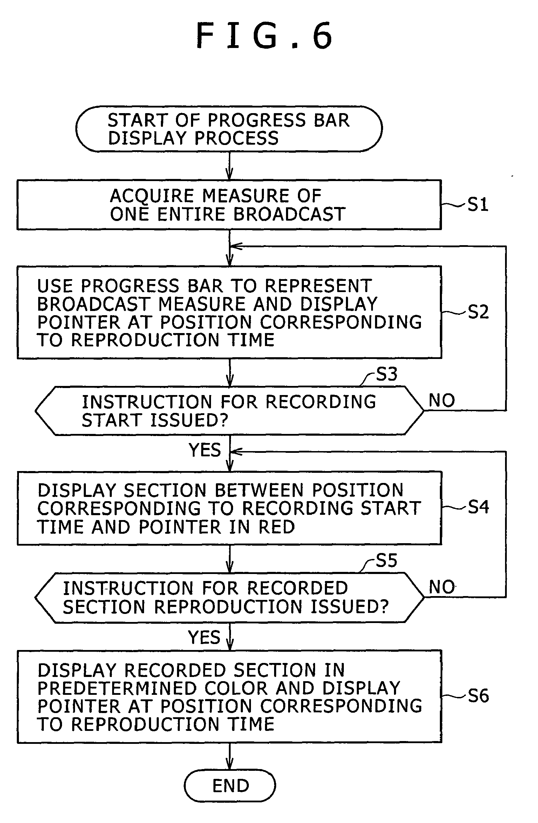

A display control method or program according to an embodiment of the present invention includes the steps (e.g., step S4 in FIG. 6) of: acquiring the time necessary for reproducing the entire target content; displaying a bar to indicate the acquired time; and exercising control so that a section between a position corresponding to the time at which the recording of the content started and a position corresponding to the time at which the recording is currently performed or the recording ended is displayed within the displayed bar in a color different from the color in which an unrecorded section is displayed.

Embodiments of the present invention will now be described with reference to the accompanying drawings.

FIG. 2 shows a recording/reproduction apparatus 1 according to an embodiment of the present invention.

The recording/reproduction apparatus 1 receives a BS (Broadcasting Satellite)/CS (Communications Satellite) digital television broadcast, a terrestrial digital television broadcast, or a broadcast through the Internet, and causes a TV (television receiver) 2 to output the audio and video of the received broadcast. In other words, a signal captured by an antenna (not shown) is supplied to the recording/reproduction apparatus 1.

The recording/reproduction apparatus 1 has a built-in hard disk or other recording medium, which records broadcast data. The recording/reproduction apparatus 1 incorporates not only a function for recording a broadcast in accordance with an instruction from a user, but also a so-called follow-up reproduction function, which reproduces recorded data while recording a broadcast and permits the user to view a portion that was broadcast earlier than the currently broadcast portion. The user uses, for instance, a remote controller to exercise the follow-up reproduction function and various other functions.

While viewing a recorded broadcast, the user can display a progress bar, which shows the measure of the broadcast with respect to 100% length. The progress bar enables the user to confirm the length and position of a recorded section with respect to the entire broadcast. The progress bar appears, for instance, at a left-hand corner of a screen of the TV 2 or other predetermined location and becomes superposed over a displayed broadcast image when the user issues an instruction for turning on the progress bar.

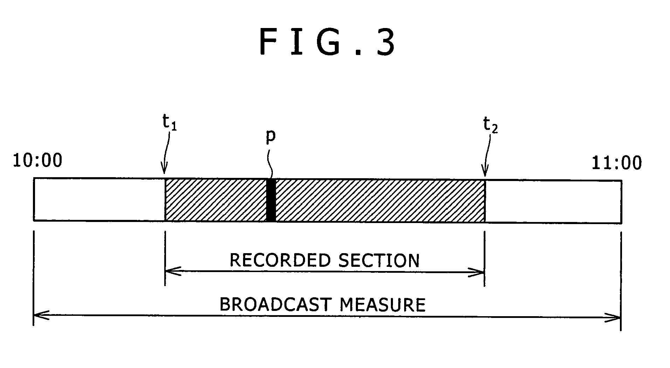

FIG. 3 shows a typical progress bar that appears on the TV 2.

If, for instance, a one-hour broadcast that begins at 10 o'clock and ends at 11 o'clock is recorded from 10:15 to 10:45, the progress bar shown in FIG. 3 appears.

In the example shown in FIG. 3, a strip having a predetermined length is displayed as the progress bar. Its overall length represents a period of one hour, which is the measure of the broadcast. Broadcast start time ("10:00") and broadcast end time ("11:00") are displayed above the left- and right-hand ends of the progress bar, respectively. The broadczast start time and broadcast end time are acquired, for instance, from an EPG (Electronic Program Guide) at the time of broadcast recording. The EPG contains the information about broadcast start time and broadcast end time as well as the information about a broadcast title, broadcast channel, broadcast overview, and the like.

In the example shown in FIG. 3, which shows the entire progress bar, a recorded section corresponding to a time zone between 10:15 and 10:45 is displayed in a color different from the color in which unrecorded sections corresponding to a time zone between 10:00 and 10:15 and a time zone between 10:45 and 11:00 are displayed. In FIG. 3, nonhatched time zones and a hatched zone represent time zones that are displayed in different colors (e.g., in white and in gray). Time t1 represents a position corresponding to 10:15 at which recording started. Time t2 represents a position corresponding to 10:45 at which recording ended. Time t1, time t2, and zone indicating arrows are not actually displayed around the progress bar. They are indicated for explanation purposes only.

A pointer P is displayed within the progress bar shown in FIG. 3 to indicate the position of a currently reproduced broadcast. As broadcast reproduction progresses, the pointer P moves rightward.

The progress bar displayed as described above enables the user to confirm the length and position of a recorded section with respect to the entire broadcast that was broadcast between 10:00 and 11:00. The progress bar shown in FIG. 3 causes the user to understand that a central portion of the broadcast was recorded for a period that is about half the entire broadcast period.

The pointer P enables the user to confirm the current reproduction position with respect to the entire broadcast while viewing the broadcast. If the employed progress bar looks like FIG. 1 and merely shows the measure of a recorded section, it is difficult to confirm the reproduction position with respect to the entire broadcast. However, the progress bar shown in FIG. 3 enables the user to readily understand that a currently reproduced portion is positioned a little before the middle of the broadcast.

A progress bar display process that is performed by the recording/reproduction apparatus 1 will be described later with reference to a flowchart.

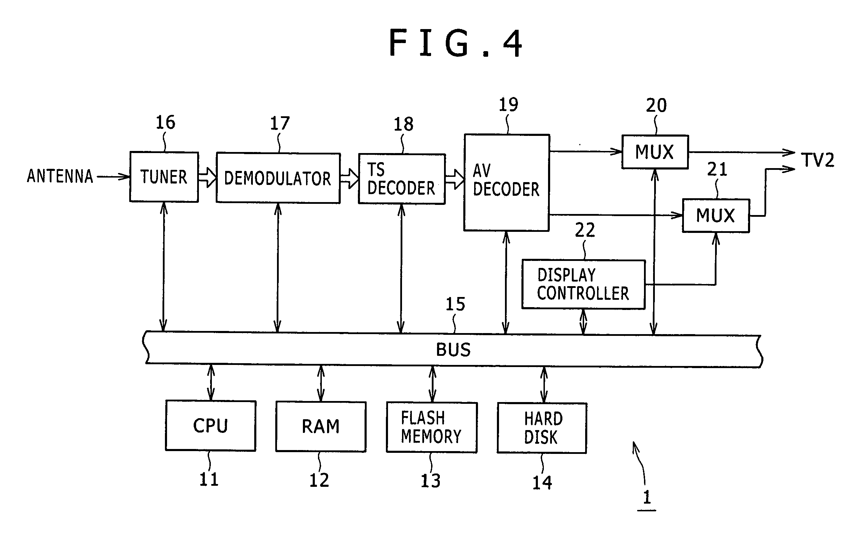

FIG. 4 is a block diagram illustrating a typical hardware configuration of the recording/reproduction apparatus 1.

A CPU (Central Processing Unit) 11 executes a program stored in a flash memory 13 or a program loaded into a RAM (Random Access Memory) 12 from a hard disk 14 to control the operations of various sections connected via a bus 15.

The RAM 12 stores the program to be executed by the CPU 11 and temporary data necessary for program execution.

The flash memory 13 is, for instance, a NOR flash memory. It stores a program code that is directly read and executed by the CPU 11 without being loaded into the RAM 12, and a file that indicates user-input programmed recording settings.

The hard disk 14 records an EPG and the data of a broadcast targeted for recording that are supplied from a TS decoder 18 via the bus 15. The broadcast data is recorded in association with the information contained in the EPG, such as the title, broadcast channel, broadcast start time, and broadcast end time of the broadcast, and with the information about recording start time and recording end time.

A tuner 16 receives a broadcast signal from the antenna in accordance with control exercised by the CPU 11, and outputs the received broadcast signal to a demodulator 17.

The demodulator 17 demodulates the signal received from the tuner 16, and outputs to the TS decoder 18 a transport stream that is to be broadcast on a predetermined channel.

In accordance with control exercised by the CPU 11, the TS decoder 18 extracts a predetermined stream from the transport stream supplied from the demodulator 17, and outputs packets, which includes the extracted stream, to the bus 15 or an AV (Audio Visual) decoder 19. The packets (broadcast data), which are output to the bus 15, are supplied to the hard disk 14 and recorded. The EPG obtained by the TS decoder 18 is also supplied to the hard disk 14 and recorded as needed.

The AV decoder 19 decodes video packets and audio packets supplied from the TS decoder 18, and outputs the decoded audio data to an MUX (multiplexer) 20 and the decoded video data to an MUX (multiplexer) 21. Further, when recorded broadcast data is read from the hard disk 14 and supplied, the AV decoder 19 decodes it and outputs the decoded audio data to the MUX 20 and the decoded video data to the MUX 21. When a recorded broadcast is to be selected as a reproduction target, a recorded broadcast list or other similar item displayed on the TV 2 is used.

In accordance with the audio data supplied from the AV decoder 19 and the data supplied from the CPU 11, the MUX 20 outputs the associated audio from a speaker on the TV 2.

In accordance with the video data supplied from the AV decoder 19 and the video data supplied from a display controller 22, the MUX 21 displays a broadcast image and the like on the TV 2. The display controller 22 supplies, for instance, the data for displaying the progress bar and the data for displaying a recorded broadcast list.

In accordance with control exercised by the CPU 11, the display controller 22 generates progress bar data to be displayed on the TV 2, and outputs the generated data to the MUX 21. The display controller 22 also generates the data about a recorded broadcast list and outputs the generated data to the MUX 21. The data about the recorded broadcast list is generated in accordance with the information about recorded broadcasts, which is recorded on the hard disk in association with broadcast data.

FIG. 5 is a block diagram illustrating a typical functional configuration of the recording/reproduction apparatus 1. At least some of the functional sections shown in FIG. 5 are implemented when a predetermined program is executed by the CPU 11, which is shown in FIG. 4.

As shown in FIG. 5, a broadcast measure acquisition section 31 and a display control section 32 are implemented in the recording/reproduction apparatus 1.

When the user issues an instruction for displaying the progress bar, the broadcast measure acquisition section 31 acquires the information about a broadcast targeted for reproduction from the EPG, which is recorded on the hard disk 14.

If, for instance, a current broadcast is to be reproduced, the broadcast measure acquisition section 31 acquires the information about the broadcast start time and broadcast end time of the current broadcast, and obtains the length of time between the broadcast start time and broadcast end time as the measure of the broadcast. The obtained measure of the broadcast indicates the broadcast time of one broadcast, that is, the time necessary for reproducing the whole broadcast. The broadcast measure acquisition section 31 outputs the obtained measure-indicating information to the display control section 32 together with the information about the broadcast start time and broadcast end time.

If, on the other hand, a recorded broadcast is to be reproduced, the broadcast measure acquisition section 31 acquires the information about broadcast start time, broadcast end time, recording start time, and recording end time, which is included in the broadcast information that is recorded on the hard disk 14 in association with broadcast data, and obtains the length of time between the broadcast start time and broadcast end time as the measure of the broadcast. The broadcast measure acquisition section 31 outputs the obtained measure-indicating information to the display control section 32 together with the temporal information acquired from the hard disk 14.

The display control section 32 controls the display controller 22 in accordance with the information supplied from the broadcast measure acquisition section 31 to display the progress bar on the TV 2 and the pointer at the current reproduction position.

When, for instance, the information indicating the measure of a current broadcast and the information about broadcast start time and broadcast end time are supplied from the broadcast measure acquisition section 31, the display control section 32 displays a progress bar that shows the broadcast start time and broadcast end time above the left- and right-hand ends and indicates the measure of the broadcast by its overall length. The length of the progress bar remains constant without regard to the measure of the broadcast, that is, no matter whether the measure of the broadcast is, for instance, 1 hour or 2 hours.

In a situation where the user issues an instruction for starting a recording operation while the TV 2 displays a progress bar that indicates the measure of a current broadcast by its overall length, the display control section 32 displays a progress bar section between a position corresponding to the time at which the recording operation was started and a position corresponding to the time at which the recording operation is currently performed (during broadcasting), for instance, in red, that is, in a color different from the color of an unrecorded section that precedes the recording operation. When the recording operation progresses with the progress of the broadcast, the red section, which represents a current recording section, extends rightward within the progress bar with a recording start position fixed. Meanwhile, an unrecorded section is displayed in white as described earlier.

When the user issues an instruction for terminating the recording operation, the display control section 32 displays a progress bar section between a position corresponding to the time at which the recording operation started and a position corresponding to the time at which the recording operation ended, for instance, in gray to indicate that it is a recorded section. The user can operate, for instance, the remote controller to start a reproduction operation from a particular position within the recorded section, which is displayed in gray.

Meanwhile, if the information indicating the measure of a recorded broadcast and the information about broadcast start time, broadcast end time, recording start time, and recording end time are supplied from the broadcast measure acquisition section 31, the display control section 32 displays a progress bar that shows the broadcast start time and broadcast end time above the left- and right-hand ends and indicates the measure of the broadcast by its overall length. The recorded section, which is located between the position corresponding to the recording start time and the position corresponding to the recording end time and contained in the displayed progress bar, is displayed in gray while the unrecorded section is displayed in white.

A process that the recording/reproduction apparatus 1 performs to exercise progress bar display control will now be described with reference to a flowchart in FIG. 6. The following description relates to a situation where the process is performed when the user issues an instruction for starting a recording operation while viewing a broadcast.

When a particular broadcast is selected as the broadcast to view, the packets constituting a stream that is extracted by the TS decoder 18 are supplied to the AV decoder 19. In accordance with data that is obtained when a decoding operation is performed by the AV decoder 19, the MUX 21 displays the video of the broadcast on the TV 2. The MUX 20 outputs the audio of the broadcast from the TV 2.

When the user issues an instruction for displaying the progress bar, the broadcast measure acquisition section 31 performs step S1 to acquire the information about the broadcast start time and broadcast end time of the current broadcast from the EPG, which is recorded on the hard disk 14, and obtain the length of time between the broadcast start time and broadcast end time as the measure of the broadcast. The broadcast measure acquisition section 31 outputs the obtained measure-indicating information to the display control section 32 together with the information about the broadcast start time and broadcast end time.

In step S2, the display control section 32 controls the display controller 22 in accordance with the information supplied from the broadcast measure acquisition section 31 to display the progress bar at a predetermined position of the TV 2 in such a manner as to show the broadcast start time and broadcast end time above the left- and right-hand ends, indicate the measure of the broadcast by its overall length, and become superposed over a displayed broadcast image.

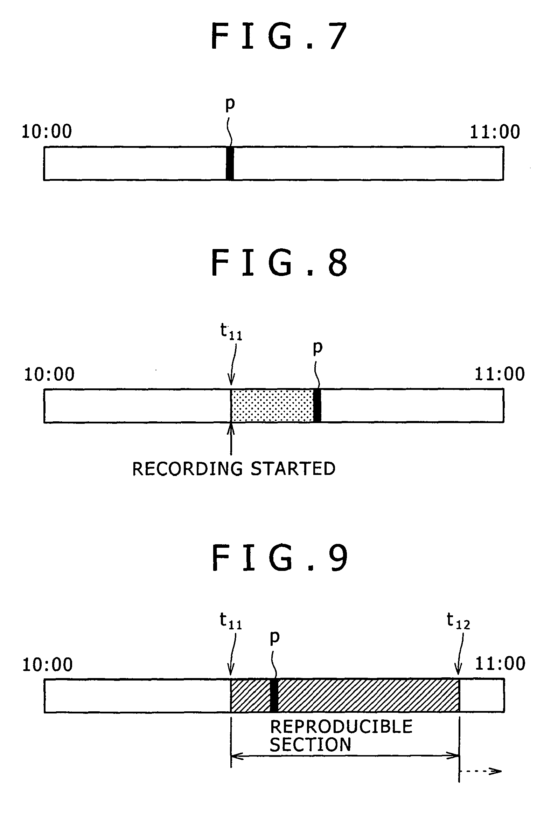

FIG. 7 shows an example to indicate how the progress bar is displayed during normal viewing during which a current broadcast is reproduced without performing a recording operation.

If an instruction for displaying the progress bar is issued while a 1 -hour broadcast that starts at 10:00 and ends at 11:00 is viewed, the progress bar shown in FIG. 7 appears. Since a recording operation is not started, the progress bar shown in FIG. 7 is entirely displayed in white, which indicates that the entire section is not recorded. In the example shown in FIG. 7, the pointer P is displayed to indicate that the middle of the 1-hour broadcast is being reproduced (broadcast).

Returning to FIG. 6, the display control section 32 performs step S3 to judge whether the user has issued an instruction for starting a recording operation. Step S2 is repeated until the judgment result obtained in step S3 indicates that the user has issued an instruction for starting a recording operation. As the broadcasting operation progresses, the pointer P moves rightward within the progress bar.

If the judgment result obtained in step S3 indicates that the user has issued an instruction for starting a recording operation, the display control section 32 proceeds to step S4 and exercises control so that the progress bar section between the position corresponding to the time at which the recording operation was started and the pointer P is displayed in red.

FIG. 8 shows an example to indicate how the progress bar is displayed during recording.

If, for instance, the user issues an instruction for starting a recording operation at the time when a broadcast position indicated by the pointer P, which is shown in FIG. 7, is being reproduced, the section between the position corresponding to the recording start time, which is indicated by time t11 as shown in FIG. 8, and the pointer P is displayed in red. In FIG. 8, the section is dotted to indicate that it is displayed in red. The progress bar shown in FIG. 8 indicates that a certain period of time has elapsed since the start of recording.

Returning to FIG. 6, the display control section 32 performs step S5 to judge whether the user has issued an instruction for starting a reproduction operation from a certain position within the recorded section. Step S4 is repeated until the judgment result obtained in step S5 indicates that the user has issued an instruction for starting a reproduction operation. When the recording operation progresses with the progress of the broadcast, the pointer P moves rightward within the progress bar, thereby causing the red section to extend rightward.

If, on the other hand, the judgment result obtained in step S5 indicates that the user has issued an instruction for starting a reproduction operation from a certain position within the recorded section, the display control section 32 proceeds to step S6. The recorded section may be reproduced in two ways. One is to start a reproduction operation after stopping the ongoing recording operation. The other is to perform a reproduction operation while continuing with the recording operation (follow-up reproduction). The broadcast data of a recorded section following the reproduction instruction position is successively read from the hard disk 14 and reproduced, for instance, by the AV decoder 19.

In step S6, the display control section 32 displays the recorded section within the progress bar in gray or other predetermined color, and displays the pointer P at a progress bar position that corresponds to the current reproduction position. As the reproduction operation progresses, the pointer P moves rightward. The process terminates when an instruction for turning off the progress bar is issued.

FIG. 9 shows an example to indicate how the progress bar is displayed while a recorded section is reproduced.

If, for instance, the recording operation progresses while the progress bar is displayed as indicated in FIG. 8 and an instruction for reproducing a recorded section from its beginning is issued at the time close to 11:00 at which the broadcast ends, the TV 2 displays a recorded broadcast image and displays the progress bar shown in FIG. 9 over the broadcast image.

In the example shown in FIG. 9, the section between the position corresponding to the recording start time (time t11) and the position corresponding to the recording end time (time t12) is displayed in gray while the current reproduction position is indicated by the pointer P. The user can start a reproduction operation from a desired position within the gray section. The progress bar in FIG. 9 indicates that a certain period of time has elapsed since the start of reproduction of the recorded section.

If the follow-up reproduction function is exercised to reproduce the recorded section, the right-hand end of the gray section moves rightward as indicated by the arrow with a broken line as the recording operation progresses with the progress of the broadcast.

As described above, the recording/reproduction apparatus 1 indicates the measure of a broadcast by using the entire progress bar and displays a previously recorded section and currently recorded section in a color different from the color of an unrecorded section. Therefore, the user can visually grasp the length and position of a recorded section with respect to the entire broadcast.

The foregoing description assumes that the recording/reproduction apparatus 1 displays an unrecorded section in white, a previously recorded section in gray, and a currently recorded section in red. However, the other colors may also be used instead of the above colors.

During normal viewing, the word "LIVE" may be additionally displayed near the progress bar, which is displayed as described above. While a recording operation is being performed, a mark may be additionally displayed to indicate that recording is in progress. Further, while a recorded section is being reproduced, a mark may be additionally displayed to indicate that reproduction is in progress.

A series of processes described above can be performed not only by hardware but also by software. When the series of processes is to be performed by software, the programs constituting the software are installed from a program recording medium onto a computer built in dedicated hardware or a general-purpose personal computer or other computer that can execute various functions when various programs are installed.

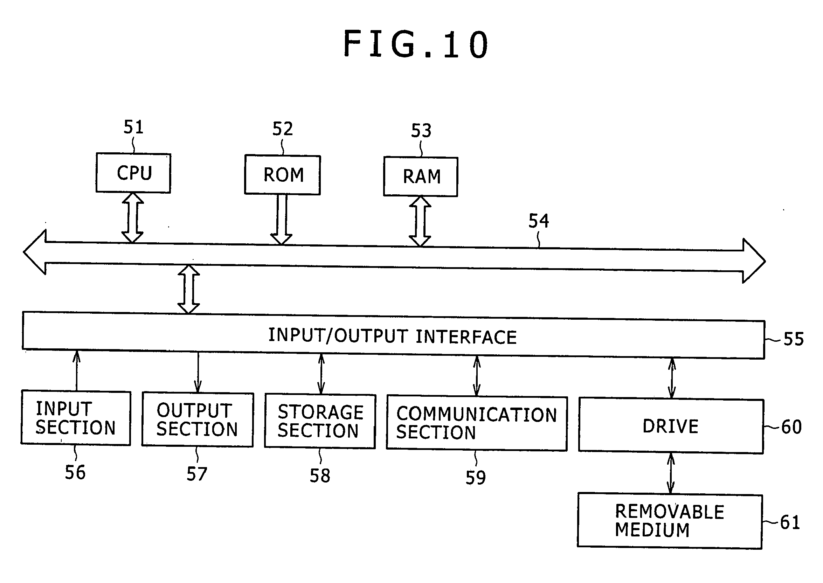

FIG. 10 is a block diagram illustrating a typical configuration of a personal computer that uses programs to perform the above-mentioned series of processes.

A CPU 51 performs various processes in accordance with the programs that are stored in a ROM 52 or a storage section 58. A RAM 53 stores, for instance, the programs to be executed by the CPU 51 and data as needed. The CPU 51, ROM 52, and RAM 53 are interconnected via a bus 54.

The CPU 51 is connected to an input/output interface 55 via the bus 54. The input/output interface 55 is connected to an input section 56, which includes a keyboard, a mouse, a microphone, and the like, and to an output section 57, which includes a display, a speaker, and the like. The CPU 51 performs various processes in accordance with instructions input from the input section 56. The CPU 51 outputs processing results to the output section 57.

The storage section 58, which is connected to the input/output interface 55, is, for instance, a hard disk and used to store the programs to be executed by the CPU 51 and various data. A communication section 59 communicates with an external device via a network such as the Internet or local area network.

When a magnetic disk, optical disc, magnetooptical disk, semiconductor memory, or other removable medium 61 is set in a drive 60 that is connected to the input/output interface 55, the drive 60 drives the removable medium 61 and acquires programs and data that are recorded on the removable medium 61. The acquired programs and data are transferred as needed to the storage section 58 and stored.

As indicated in FIG. 10, the program recording medium for storing programs, which are to be installed on a computer and rendered computer-executable, is a removal medium 61, which is a package medium such as a magnetic disk (flexible disk included), optical disc (CD-ROM (Compact Disc-Read Only Memory) and DVD (Digital Versatile Disc) included), magnetooptical disk, or semiconductor memory, the ROM 52 in which the programs are stored temporarily or permanently, or a hard disk that includes the storage section 58. The programs are stored on the program recording medium as needed via the communication section 59, which is an interface for a router, modem, or the like, by using a wired or wireless communication medium such as the Internet, local area network, or digital satellite broadcast.

In this document, the steps that describe the programs not only include processes that are performed in a described chronological order but also include processes that are performed parallelly or individually and not necessarily in chronological order.

Whilst preferred embodiments have been described above, it should be understood that the invention is not limited to the foregoing preferred embodiments, and that variations may be made without departure from the scope of the invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Whilst the embodiments described above each include explicitly recited combinations of features according to different aspects of the present invention, other embodiments are envisaged according to the general teaching of the invention, which include combinations of features as appropriate, other than those explicitly recited in the embodiments described above. Accordingly, it will be appreciated that different combinations of features of the appended independent and dependent claims form further aspects of the invention other than those, which are explicitly recited in the claims.

## Claims

1. A recording/reproduction apparatus, comprising:
an acquisition section configured to acquire the time necessary for reproducing the entire target content; and
a display control section configured to display a bar that indicates the time acquired by the acquisition section, and exercise control so that a section between a position corresponding to the time at which the recording of the content started and a position corresponding to the time at which the recording is currently performed or the recording ended is displayed within the displayed bar in a manner different from the manner in which an unrecorded section is displayed.

2. The recording/reproduction apparatus according to claim 1, wherein the display control section exercises control so that the section between the position corresponding to the time at which the recording of the content started and the position corresponding to the time at which the recording is currently performed or the recording ended is displayed in a color different from the color in which an unrecorded section is displayed.

3. The recording/reproduction apparatus according to claim 1, wherein the acquisition section acquires the length of time between content broadcast start time and content broadcast end time from an Electronic Program Guide as the time necessary for reproducing the entire content.

4. The recording/reproduction apparatus according to claim 1, wherein the length of the bar is fixed.

5. The recording/reproduction apparatus according to claim 1, wherein the display control section displays a pointer at a current reproduction position within the bar.

6. A display control method, comprising the steps of:
acquiring the time necessary for reproducing the entire target content;
displaying a bar to indicate the acquired time; and
exercising control so that a section between a position corresponding to the time at which the recording of the content started and a position corresponding to the time at which the recording is currently performed or the recording ended is displayed within the displayed bar in a color different from the color in which an unrecorded section is displayed.

7. A program that causes a computer to perform a process comprising the steps of:
acquiring the time necessary for reproducing the entire target content;
displaying a bar to indicate the acquired time; and
exercising control so that a section between a position corresponding to the time at which the recording of the content started and a position corresponding to the time at which the recording is currently performed or the recording ended is displayed within the displayed bar in a color different from the color in which an unrecorded section is displayed.
